Europäisches Patentamt

European Patent Office

Office européen des brevets

(11) Veröffentlichungsnummer: **0 168 520**
**A1**

## (12) EUROPÄISCHE PATENTANMELDUNG

(21) Anmeldenummer: 84110807.9

(51) Int. Cl.⁴: **H 02 P 7/00, E 05 F 15/16**

(22) Anmeldetag: 11.09.84

(30) Priorität: 08.10.83 DE 3336645

(43) Veröffentlichungstag der Anmeldung: 22.01.86
Patentblatt 86/4

(84) Benannte Vertragsstaaten: **DE FR SE**

(71) Anmelder: **ROBERT BOSCH GMBH, Postfach 50,
D-7000 Stuttgart 1 (DE)**

(72) Erfinder: **Rubel, Erich, Dipl.-Ing., Stammheimer
Strasse 53, D-7140 Ludwigsburg (DE)**

(54) **Einrichtung zur automatischen Türüberwachung.**

(57) Es wird eine Einrichtung zur automatischen Türüberwachung vorgeschlagen, die aus einem Steuergerät und
Überwachungsgeräten für den Türraum besteht, und insbesondere Einsatz in Fahrzeugen für den Personennahverkehr findet. Das Steuergerät (10) besteht im wesentlichen
aus einem Mikroprozessor (16), einem programmierbaren
Festwertspeicher (19) und einem Interface (18). Die Überwachungsgeräte (20, 30) bestehen aus untereinander im wesentlichen gleichen Rechnern. Das Steuergerät (10) und die
Überwachungsgeräte (20, 30) sind durch Übertragungsleitungen (13) miteinander verbunden. Mit Hilfe eines Codierschalters (17) lassen sich verschiedene Steuerungsvariationen aufrufen.

R. 19006
3.10.1983 Ko/Pi

ROBERT BOSCH GMBH, 7000 STUTTGART 1

Einrichtung zur automatischen Türüberwachung

Stand der Technik

Die Erfindung geht aus von einer Einrichtung zur automatischen Türüberwachung nach der Gattung des Hauptanspruchs. Aus dem Prospekt der Fa. AEG-Telefunken, betreffend das "Türautomatik-Steuergerät, Typ TA 16A",
ist bereits für den Einsatz in Omnibussen, insbesondere
für den öffentlichen Personennahverkehr, ein vollelektronisches Türautomatik-Steuergerät bekannt, das alle
Signale vom Fahrgast, Fahrer und den Überwachungsgeräten
verarbeitet und die Fahrzeugtüre automatisch betätigt.
Für jede automatisierte Tür wird ein Steuergerät benötigt. An jedes Gerät können ein oder mehrere Überwachungselemente der verschiedenen Systeme, Reflektionslichtschranken, elektronische Trittstufenschaltung und Druckwellenschalter angeschlossen werden.

Die Signale für ein derartiges Steuergerät unterliegen
einer Vielzahl von logischen Verknüpfungen, die zur Zeit
in der Regel durch Relaisschaltungen erzeugt werden,
die nach Kundenwunsch ausgelegt sind. Es hat sich her-

...

ausgestellt, daß jeder Kunde, wie beispielsweise ein städtischer Busbetrieb, seine eigene, von anderen abweichende Logik fordert. Einzelne Hersteller sind dadurch gezwungen, auf Kundenwunsch bis zu 80 verschiedene Variationen von Logiken bereitzuhalten. Für diese Vielzahl von Variationen sind entsprechend verschiedene Schaltpläne für die Logikschaltungen, entsprechende Kabelbäume, Stücklisten usw. notwendig.

Vorteile der Erfindung

Die erfindungsgemäße Einrichtung mit den kennzeichnenden Merkmalen des Hauptanspruches hat demgegenüber den Vorteil, daß nur ein einheitliches Steuergerät und verschiedene einheitliche Überwachungsgeräte erforderlich sind, die über einen einheitlichen Kabelbaum mit geringer Anzahl der Adern verbunden sind. Das Steuergerät und die Überwachungsgeräte sind als Rechner ausgebildet, wobei Steuerprogramme und -daten des Steuergerätes in einem programmierbaren Festwertspeicher untergebracht sind. In vorteilhafter Weise läßt sich eine Steuerungsvariation durch Umprogrammierung des Festwertspeichers leicht erreichen. Auch neue Variationen hinzuzufügen ist leicht möglich.

Durch die in den Unteransprüchen aufgeführten Maßnahmen sind vorteilhafte Weiterbildungen der im Hauptanspruch angegebenen Einrichtung möglich. Besonders vorteilhaft ist es, daß der Rechner des Steuergerätes mit peripheren Ein- und Ausgängen ausgestattet ist, die es ermöglichen, die Türüberwachung in Abhängigkeit verschiedener Fahrzeugdaten zu beeinflussen, wie beispielsweise Fahrzeuggeschwindigkeit, Preßdruck der Haltestellenbremse, Standlicht usw.

- 3 -

Des weiteren ist es vorteilhaft, daß durch Verwendung
eines manuell betätigbaren Codierschalters verschiedene
Adressbereiche im Festwertspeicher vorwählbar sind, wobei jeder der möglichen Schalterpositionen eine Variation
der Steuerungsmöglichkeiten entspricht. Hierdurch sind
bei einem 8stelligen Codierschalter 256 Logikvariationen
einstellbar, ohne daß damit direkt schaltungstechnische
Änderungen erforderlich sind.

Zeichnung

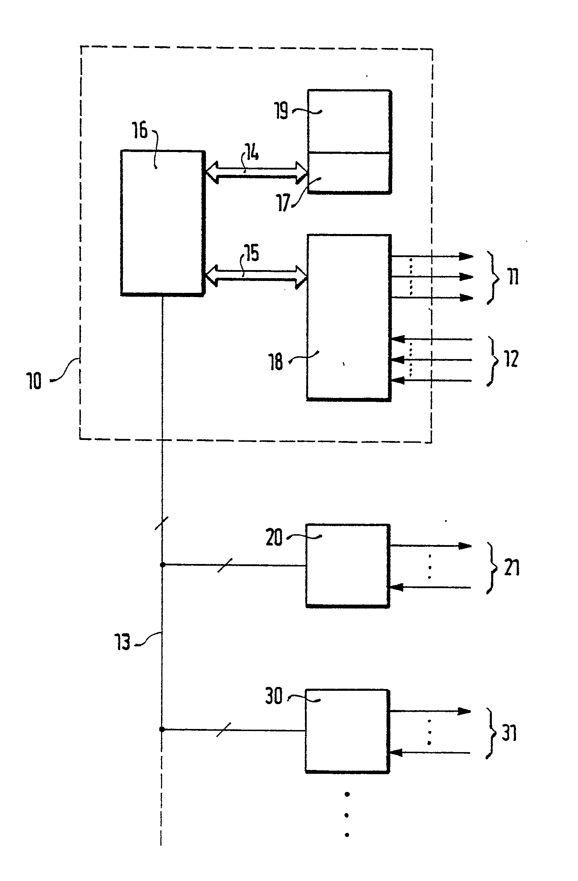

Ein Ausführungsbeispiel ist in der Zeichnung dargestellt
und in der nachfolgenden Beschreibung näher erläutert. Es
zeigt Figur 1 ein Strukturdiagramm einer Einrichtung zur
automatischen Türüberwachung.

Beschreibung des Ausführungsbeispieles

In Figur 1 sind ein Steuergerät 10 und zwei Überwachungsgeräte 20, 30 dargestellt. Zur Vereinfachung der Darstellung sind im Steuergerät 10 keine Anschlüsse zur Stromversorgung oder Steckeranschlußbelegungen dargestellt,
sondern lediglich Rechnerbaugruppen. Des weiteren sind
lediglich zwei Überwachungsgeräte 20, 30 dargestellt,
es ist aber prinzipiell möglich, beliebig viele Überwachungsgeräte anzuschließen.

Ein Mikroprozessor 16 ist über einen Steuerbus 14 mit
einem programmierbaren Festwertspeicher 19 und einem
Codierschalter 17 verbunden, sowie über einen Interfacebus 15 mit einem Interface 18 verbunden. Vom Mikroprozessor 16 des Steuergerätes 10 führen Übertragungsleitungen
13 zu den Überwachungsgeräten 20, 30. Das Steuergerät 10

...

besitzt Ausgänge 11 und Eingänge 12 zur Peripherie, die
an das Interface 18 angeschlossen sind. Die Überwachungsgeräte 20, 30 besitzen periphere Ein- bzw. Ausgänge 21, 31.

Das Steuergerät 16 erhält periphere Signale durch das Interface 18 über die Eingänge 12 wie z.B. vom Fahrer, daß die
Türfreigabe betätigt wurde, Kinderwagenschaltung eingeschaltet wurde usw. oder vom Fahrzeug, wie Signalspannungen vom
Gaspedal, Systemdruck, Standlicht, Haltestellenbremsventil,
Bremsdruck der Haltestellenbremse, Fahrzeuggeschwindigkeit usw. Über die Ausgänge 11 kann das Steuergerät 10 das
Haltestellenbremsventil betätigen, ein akustisches Signal
abgeben, Kontrolleuchten für Haltewunsch, Türfreigabe,
Anfahrsperre, Kinderwagenschaltung, Abfahrtsbereitschaft
usw. abgeben. Zur einfachen Erweiterung dieser peripheren
Anschlußmöglichkeiten sind weitere Ein- und Ausgänge reserviert.

Über die Übertragungsleitungen 13 kommuniziert das Steuergerät 10 mit den Überwachungsgeräten 20, 30. Es ist je
nach konstruktiver Ausführung wahlweise möglich, über die
Übertragungsleitungen 13 serielle oder parallele Datenkommunikation zu betreiben.

Über die Ein- und Ausgänge 21, 31 erhalten die Überwachungsgeräte 20, 30 folgende Eingangsinformationen:
Haltewunsch, Öffnungswunsch, Kinderwagenwunsch, Belegtmeldung des Türbereichs, Hindernismeldung im Türbereich,
Türendlageschalter, Schließdruck, Öffnungsdruck, Automatfunktion usw. Ausgangssignale geben die Überwachungsgeräte 20, 30 ab an: Türventil, Notventil, Druckreduzierventil, Flügelblockierventil, Nothahnfreigabe, akustisches
Signal, Einstiegsbeleuchtung, Beleuchtung verschiedener

...

Leuchtschriften usw. Wie beim Steuergerät sind auch hier
Reserve-Ein- und Ausgänge vorgesehen.

Die Vielzahl der Anschlußmöglichkeiten läßt erkennen,
daß eine große Vielzahl von Funktionsabläufen möglich
ist. Ein typischer Funktions-Ablauf für eine Haltestelle ist im folgenden als Beispiel beschrieben:

Das Steuergerät 10 ist bereit zum Empfang auf den Übertragungsleitungen 13, die Überwachungsgeräte 20, 30 sind
bereit zum Empfang von der Peripherie über die Eingänge
21, 31. Ein Fahrgast drückt auf eine Haltewunsch-Taste
an der Türe 2. Das dieser Tür zugeordnete Überwachungsgerät 30 gibt den Haltewunsch an das Steuergerät 1o
weiter. Dieses läßt für eine Sekunde beim Fahrer eine
Glocke ertönen und läßt die Kontrolleuchte "Haltewunsch"
beim Fahrer aufleuchten, jedoch mit reduzierter Helligkeit, da das Steuergerät 10 über einen Eingang 12 erkennt, daß das Standlicht eingeschaltet ist. Danach
meldet das Steuergerät 10 über die Übertragungsleitungen
13 dem Überwachungsgerät 30, die Leuchtschrift "Wagen
hält" einzuschalten.

An einer Haltestelle hält der Fahrer und betätigt den
Schalter "Türfreigabe". Das Steuergerät 10 prüft die
Fahrgeschwindigkeit. Ist sie kleiner als 3 km/h, so
steuert er das Haltestellenbremsventil an. Liegt der
Bremsdruck an, so meldet das Steuergerät 10 über die
Übertragungsleitungen 13 an das Überwachungsgerät 30
die Schrift "Aussteigen, Bitte Knopf drücken" und das
Kinderwagensymbol zu beleuchten. Ferner erteilt er dem
Überwachungsgerät die Erlaubnis, die Türe zu öffnen,
wenn jetzt ein Fahrgast eine Öffnungswunsch-Taste drückt.
Nach Drücken dieser Taste öffnet das Überwachungsgerät 30

...

die Tür und meldet dies an das Steuergerät 10. Es erhält als Antwort den Befehl, die Leuchtschrift "Aussteigen, Bitte Knopf drücken" zu löschen. Beim Fahrer läßt das Steuergerät 10 die der Türe zugeordnete Kontrolleuchte aufleuchten. Das Überwachungsgerät 30 beginnt selbständig mit einer Zeitzählung von 2 Sekunden, prüft nach Ablauf der Zeit, ob der Türraum frei ist, wenn nicht, beginnt die Zeitzählung erneut. Ist der Türraum frei, so schließt das Überwachungsgerät die Tür. Trifft sie auf ein Hindernis, so reversiert das Überwachungsgerät 30 die Türbewegung. Nach erneutem Ablauf der Zeitzählung läuft ein neuer Schließversuch.

Drückt ein Fahrgast auf die Taste mit dem Kinderwagensymbol, so meldet das Überwachungsgerät 30 es an das Steuergerät 10. Dieses fordert durch ein Blinklicht und einem Glockenschlag den Fahrer auf, den Schalter "Kinderwagen" einzulegen. Ist das erfolgt, befiehlt das Steuergerät 10 dem Überwachungsgerät 30, die Zeitzählung zu stoppen. Damit bleibt die Türe beliebig lange geöffnet. Der Fahrer vergewissert sich durch Augenschein, ob der Kinderwagen den Türraum passiert hat. Dann schaltet er den Schalter "Kinderwagen" wieder aus. Das Überwachungsgerät 30 beginnt die Zeitzählung, um die Türe zu schließen. Wenn der Fahrer den Freigabeschalter zurückgelegt hat, erlaubt das Steuergerät 10 keinem der Überwachungsgeräte 20, 30 mehr, eine Türe auf Anforderung zu öffnen. Liegt im Steuergerät 10 von allen Überwachungsgeräten die Geschlossen-Meldung vor, so läßt die Lampe "Abfahrbereit" beim Fahrer aufleuchten. Sobald der Fahrer das Fahrpedal niederdrückt, löst das Steuergerät 10 die Haltestellenbremse.

Dieses hier beschriebene Beispiel einer Türsteuerung an einer Haltestelle ist selbstverständlich nicht die

...

einzige Möglichkeit. Bestehen in Zukunft neue Sensoren, neuartige Ventile oder anderweitig neue Strategien der Türsteuerung, so können entsprechende Änderungen alleine durch Änderungen im Programmablauf des Festwertspeichers 19 durchgeführt werden.

R. 19006
3.10.1983 Ko/Pi

0168520

ROBERT BOSCH GMBH, 7000 STUTTGART 1

Ansprüche

1. Einrichtung zur automatischen Türüberwachung bestehend aus einem Steuergerät und Überwachungsgeräten für den Türraum, dadurch gekennzeichnet, daß das Steuergerät (10) als ein Rechner ausgebildet ist, der die zur Steuerung notwendigen Programme und Daten in einem programmierbaren Festwertspeicher (19) enthält, daß die Überwachungsgeräte (20, 30) Rechner enthalten und untereinander im wesentlichen gleich sind, daß das Steuergerät (10) und die Überwachungsgeräte (20, 30) untereinander mit wenigstens drei Übertragungsleitungen (13) verbunden sind.

2. Einrichtung nach Anspruch 1, dadurch gekennzeichnet, daß das Steuergerät (10) wenigstens einen Mikroprozessor (16) enthält, der über Busleitungen (14, 15) mit dem Festwertspeicher (19) und wenigstens einem Interface (18) verbunden ist, welches Ausgänge (11) bzw. Eingänge (12) zur Peripherie besitzt.

3. Einrichtung nach Anspruch 1 oder 2, dadurch gekennzeichnet, daß durch einen Codierschalter (17) verschiedene Adreßbereiche im Festwertspeicher (19) vorgewählt werden, die verschiedene Steuerprogramme oder -daten enthalten.

...

4. Einrichtung nach einem der vorhergehenden Ansprüche, dadurch gekennzeichnet, daß die Überwachungseinrichtungen (20, 30) über Ein- und Ausgänge (21, 31) zur Peripherie des Türraumes verbunden sind.

5. Einrichtung nach einem der vorhergehenden Ansprüche, dadurch gekennzeichnet, daß eine der Übertragungsleitungen (13) dazu dient, zu erkennen, ob sich das Steuergerät (10) in empfangs- oder sendebereitem Zustand befindet, und daß eine der Übertragungsleitungen (13) zur Festlegung eines elektrischen Bezugspotentials dient.

6. Einrichtung nach Anspruch 5, dadurch gekennzeichnet, daß eine Informationsübertragung über eine der Übertragungsleitungen (13) seriell erfolgt.

7. Einrichtung nach Anspruch 5, dadurch gekennzeichnet, daß eine Informationsübertragung über die Übertragungsleitungen (13) parallel erfolgt.

8. Einrichtung nach einem der vorhergehenden Ansprüche, dadurch gekennzeichnet, daß die Einrichtung zur Türüberwachung in Fahrzeugen für den Personenverkehr dient und daß das Steuergerät (10) über wenigstens einen Eingang (12) Fahrzeugdaten erhält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-1 604 234 (TORBRIDGE INVESTMENTS LTD.) <br> * Seite 2, Zeile 75 - Seite 3, Zeile 34; Figur 1 * | 1 | H 02 P 7/00 <br> E 05 F 15/16 |
| A | US-A-4 338 553 (W.M. SCOTT Jr.) <br> * Zusammenfassung; Abbildung 3 * | 1 | |
| A | DE-A-3 022 866 (GEBR. DICKERTMANN) <br> * Seite 6, Zeile 9 - Seite 8, Zeile 24; Figur 1 * | 1-4 | |
|  |  |  | RECHERCHIERTE SACHGEBIETE (Int. Cl.4) |
|  |  |  | H 02 P 7/00 <br> E 05 F 15/00 |

Der vorliegende Recherchenbericht wurde für alle Patentansprüche erstellt.

| Recherchenort <br> DEN HAAG | Abschlußdatum der Recherche <br> 03-10-1985 | Prüfer <br> DUCHEYNE R.C.L. |
|---|---|---|